# EUROPEAN PATENT SPECIFICATION

(11) **EP 4 632 158 B1**
(45) Date of publication and mention of the grant of the patent: **02.12.2026**
(21) Application number: 25199735.9
(22) Date of filing: 31.10.2023
(51) Int. Cl.: E03B 7/12, E03B 7/10, F16K 27/02, F16K 31/00

(54) **ANTIFREEZE VALVE DEVICE AND PLANT USING SAID DEVICE**
FROSTSCHUTZVENTILVORRICHTUNG UND ANLAGE MIT DIESER VORRICHTUNG
DISPOSITIF DE VALVE ANTIGEL ET INSTALLATION UTILISANT LEDIT DISPOSITIF

(30) Priority: 30.11.2022 IT 202200024654
(43) Date of publication of application: 15.10.2025
(62) Document number(s) of the earlier application(s) in accordance with Art. 76 EPC: 23207115.9 / 4 379 156
(73) Proprietor: CIMBERIO HOLDING S.r.l., 20145 Milano (IT)
(72) Inventor: CIMBERIO, Roberto, 28010 Ameno Fraz. Vacciago (NO) (IT); GUIDETTI, Tiziano, 28021 Borgomanero (NO) (IT); CHIARELLO, Andrea, 28040 Oleggio Castello (NO) (IT)
(74) Representative: PGA S.p.A.

(56) References cited:
- EP-B1- 2 182 261
- CN-A- 106 764 021

## Description

### TECHNICAL FIELD

The present invention concerns an antifreeze valve device suitable for preventing freezing of water circulating in a hydraulic plant where the antifreeze device operates.

The invention may find advantageous application in plants exposed to frost, such as heat pump heating plants, cooling plants or in irrigation plants.

### BACKGROUND ART

Antifreeze devices and valves are known that, following the detection of a change in atmospheric temperature around a predetermined threshold, discharge water into the environment, preventing water stagnation and thus ice formation within the plumbing of the plant, which could lead to pipe breakages or water leaks.

Conventional antifreeze valves comprise a valve body having a water inlet opening connectable to a hydraulic plant, a water outlet opening, and a chamber in fluid communication with the water inlet and outlet openings, within which is housed an actuator sensitive to changes in atmospheric temperature. Such antifreeze valves also include a control rod that movable by the temperature-sensitive actuator, between a closed position in which the rod occludes the water outlet opening (atmospheric temperature above the threshold value) and an open position in which it allows water to be discharged into the environment (atmospheric temperature below the threshold value).

Although the described valve prevents water freezing in hydraulic plants, such solutions have reliability problems related to both the formation of deposits and debris on the actuator control rod and related to the entry of dirt into the valve body chamber through the water outlet opening, which can compromise the proper operation of the valve in opening and closing.

A second example of an antifreeze valve suitable for overcoming such drawbacks is described in European Patent No. EP2182261 B1, which shows a valve that differs from the conventional antifreeze valves described above in that it has a protective casing engaged to the control rod and configured to hermetically house the temperature-sensitive actuator, thus preventing the formation of deposits and the accumulation of dirt on the same temperature-sensitive actuator.

Although the valve described in EP2182261B1 is reliable against deposits and dirt, it is evident that the protective casing thermally insulates the temperature-sensitive actuator, reducing its sensitivity to temperature variations. In fact, following a temperature increase of the fluid circulating in the plant, for example through the activation of a heater or heat pump, the protective casing causes an increase in the transient related to fluid-actuator heat exchange, leading to an increase in valve closing times, and, therefore an undesirable waste of water and energy.

CN106764021A relates to an anti-freezing control device. The anti-freezing control device is composed of a temperature sensing bag shell, half-packaging water, a thermal insulation core, a thermal insulation wire sleeve, a plunger head, a plunger upper sealing ring, a plunger lower sealing ring, a screw column valve core, a pressure spring, a temperature sensing bag sealing ring, an elastic soft pipe, a valve body, a locking wire head sealing ring, a locking wire head, a pressure spring stopping ring, a leakage flowing opening sealing ring, a locking nut cap, a waterproof adhesive sticker sheet and waterproof sealing gum, wherein the waterproof adhesive sticker sheet and the waterproof sealing gum need to be removed before the ice-driving anti-freezing control device is installed and used. The ice-driving anti-freezing control device can automatically drive and control starting and stopping and flowing of a leakage flowing opening without electricity.

### OBJECT OF THE INVENTION

Object of the present invention is, therefore, to address at least one of the drawbacks and/or limitations of previous solutions.

It is an object of the present invention to provide an antifreeze valve device having a simple and compact structure, which may be easily installed on pre-existing domestic and/or industrial hydraulic plants.

It is a further object of the present invention to provide an antifreeze valve device having a high degree of reliability and requiring minimal maintenance interventions.

These objects and others, which will become more apparent from the following description, are substantially achieved by an antifreeze valve device and plant according to one or more of the following claims and/or aspects.

### SUMMARY

One or more of the above objectives are achieved by an antifreeze valve device and plant using said device as claimed.

### BRIEF DESCRIPTION OF THE DRAWINGS

Some embodiments and some aspects of the invention will be described below with reference to the attached drawings, provided for illustrative purposes only and therefore not limiting wherein:
- Figure 1 is a perspective view of the antifreeze device according to the present invention;
- Figure 2A is a longitudinal cross-section view of the antifreeze device according to the present invention having a shutter and an auxiliary shutter in their respective closed conditions;
- Figure 2B is a longitudinal cross-section view of the antifreeze device according to the present invention where the shutter is in a partially open position and the auxiliary shutter is in a closed position;
- Figure 2C is a longitudinal cross-section view of the antifreeze device according to the present invention where the shutter and auxiliary shutter are in their respective open conditions;
- Figure 3 is a longitudinal sectional view of a variant of the antifreeze device according to the present invention;
- Figure 4 is a cutaway perspective view of the antifreeze device according to the present invention; and
- Figure 5 is a schematic view of a plant according to the present invention.

### DEFINITIONS AND CONVENTIONS

Note that in the detailed description corresponding parts illustrated in the various figures are shown with the same numerical references. The figures may illustrate the subject matter of the invention by means of representations that are not to scale; therefore, parts and components illustrated in the figures related to the subject matter of the invention may relate only to schematic representations.

### DETAILED DESCRIPTION

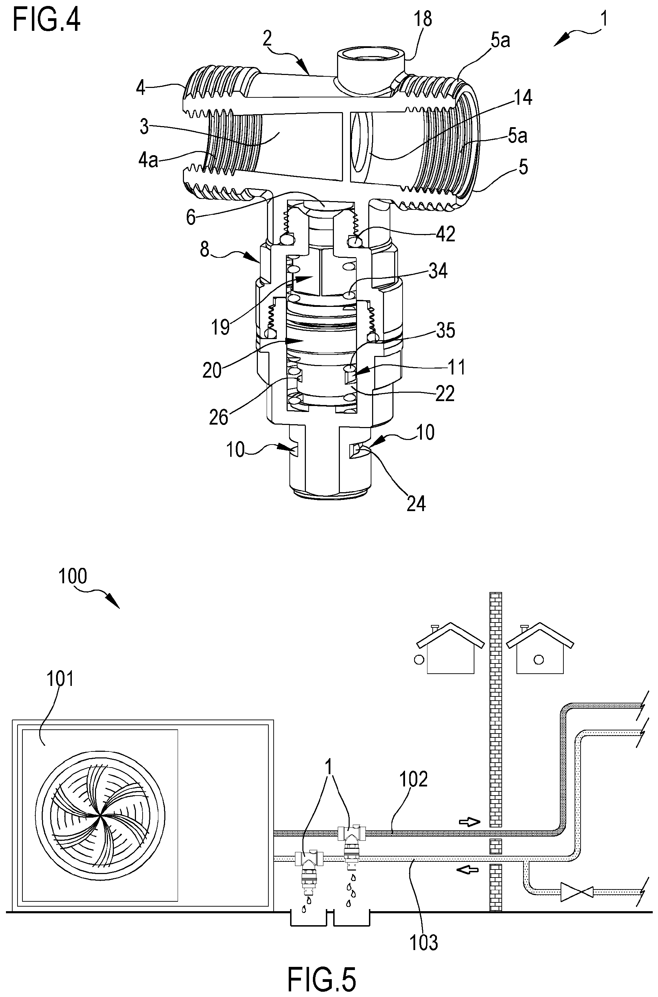

An antifreeze device 1 has been generally indicated for hydraulic plants exposed to freezing conditions where the use of antifreeze liquids is not possible for potability reasons. As shown in Figure 5, the antifreeze device 1 may be installed in a plant 100, such as a heating plant, located at least partially outside a closed environment to be heated, whether industrial or domestic. The plant 100 includes a thermal unit 101, such as a heat pump heating or cooling unit, which can be installed outside the closed environment, to which at least one supply line 102 and at least one return line 103 are connected for distributing fluid from the thermal unit 101 to the interior of the closed environment. The plant 100 further comprises one or more antifreeze devices 1 installed on each of the supply and return lines 102 and 103, preferably at a section of said lines located outside the closed environment, so as to detect a variation in fluid temperature around a predetermined threshold and, depending on the detected temperature value, discharge water into the environment. The antifreeze device 1 described in the following, thus performs the function of preventing water stagnation, and thus the formation of ice, in the supply and return lines which could lead to pipe breakages or water leaks.

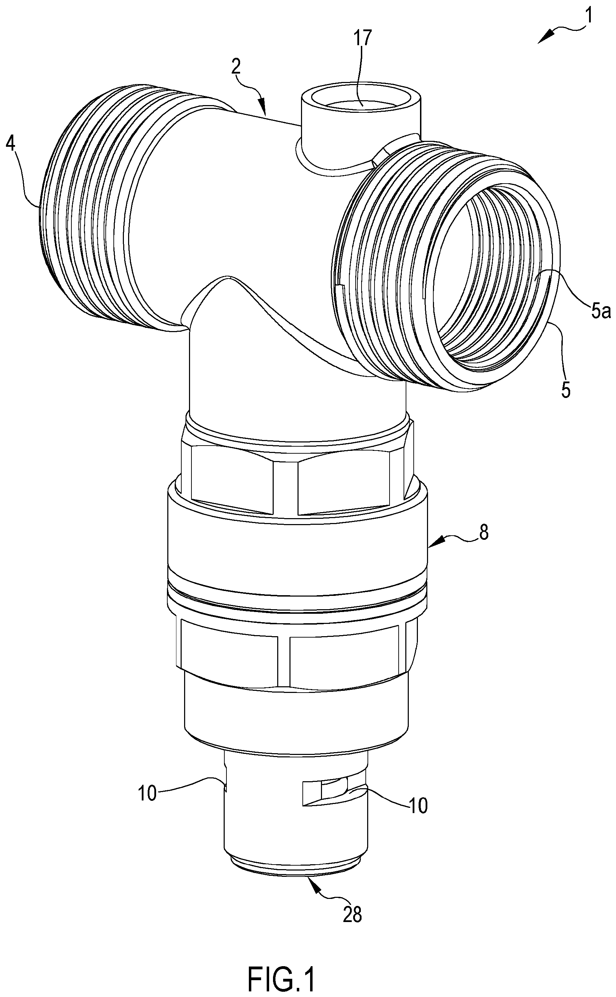

Turning now to describe the antifreeze device 1 shown in Figures 1-4, it can be made in two pieces that are removably fluid-tight engaged with each other, namely a manifold 2 engageable to the supply and return lines 102, 103 of the plant 100, and by a valve body 8 responsible for discharging water in an environment outside the device 1.

The manifold 2 has a substantially tubular structure comprising an inlet 4 and an outlet 5 with respective engagement portions 4a, 5a, for example threaded or press-fit portions, to allow the manifold 2 to be fluid-tightly engaged with the supply and return lines 102, 103 of the system 100. The manifold 2 also includes a channel 3 that places inlet 4 in fluid communication with outlet 5, allowing the passage of fluid through the aforementioned lines. The channel 3 is laterally bounded by an inner surface also having tubular shape and having a constant cross-section, except for the section of channel 3 where a shoulder 14 is defined, as described in the following. Thus, the collector 2 has a constant cross-section S1, measured internally to the channel 3, for example, ranging in size from 10 mm to 50 mm.

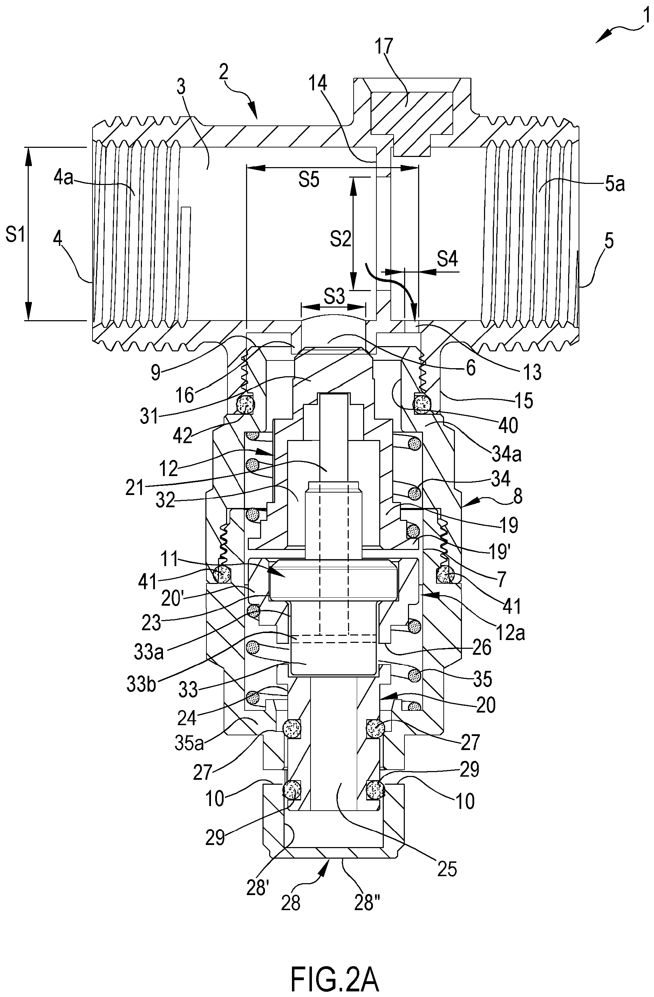

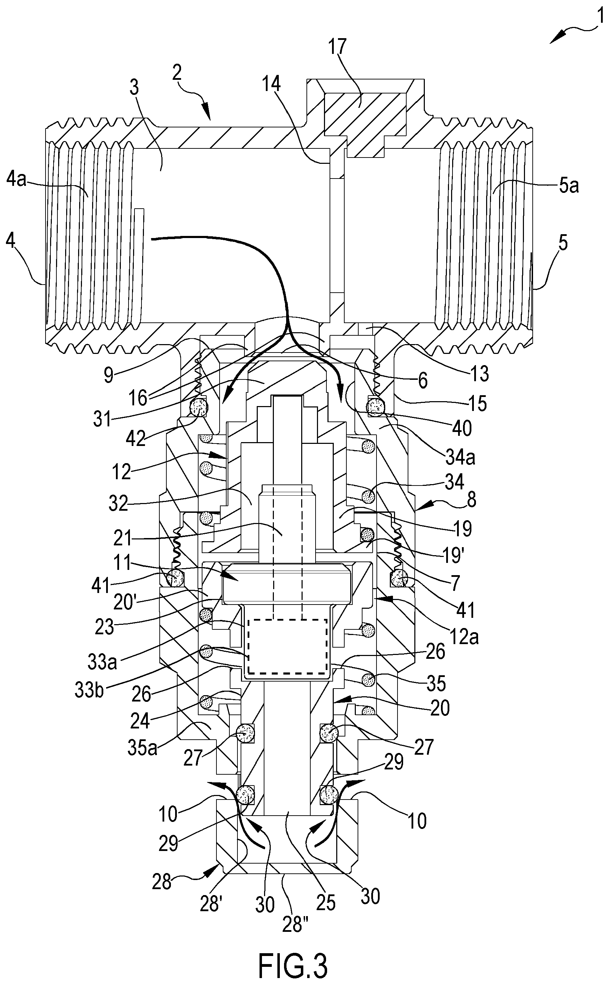

As, for example, shown in Figures 2A-2C and 3, representing a longitudinal section of device 1, the manifold 2 at least partially communicates with the valve body 8 by means of an auxiliary opening 6 passing the inner surface of the channel 3 and interposed between the inlet 4 and the outlet 5 of the manifold 2. The auxiliary aperture 6 is laterally bounded by a lip 16, optionally having tubular shape, emerging from an outer surface of manifold 2 on the opposite side from channel 3 and defining a fluid cross-section S3 of auxiliary aperture 6 that is smaller than the constant cross-section S1 of the manifold 2, as it has, for example, dimensions comprised between 5 mm and 20 mm. In a further aspect, the dimensional ratio between the constant cross-section S1 of the manifold 2 and the cross-section S3 of the auxiliary opening 6 may be comprised between 1.5 and 10.

It is worth noting that the manifold 2 also has an orifice 13 distinct from the auxiliary opening 6 and facing the valve body 8 to place it in fluid communication with the channel 3 of the manifold 2. From a structural point of view, the orifice 13 is a small opening, crossing the side wall of the manifold 2 and defined in interposition between the auxiliary opening 6 and the outlet 5 of the manifold 2. In fact, the orifice 13 has, for example, a cross-section S4 comprised between 1 mm and 6 mm, thus being dimensionally smaller than both the constant cross-section S1 of the manifold 2 and the cross-section S3 of the auxiliary opening 6. The ratio between the constant cross-section S1 of the manifold 2 to the cross-section S4 of the orifice 13 is comprised between 1.5 and 50, while the ratio between the cross-section S3 of the auxiliary opening 6 to the cross-section S4 of the orifice 13 is comprised between 1.5 and 20.

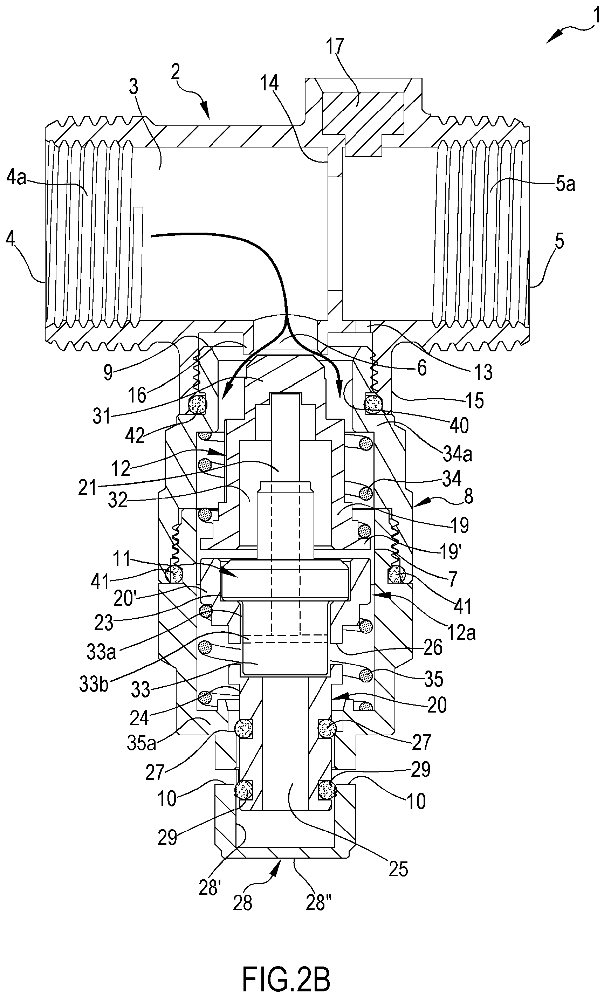

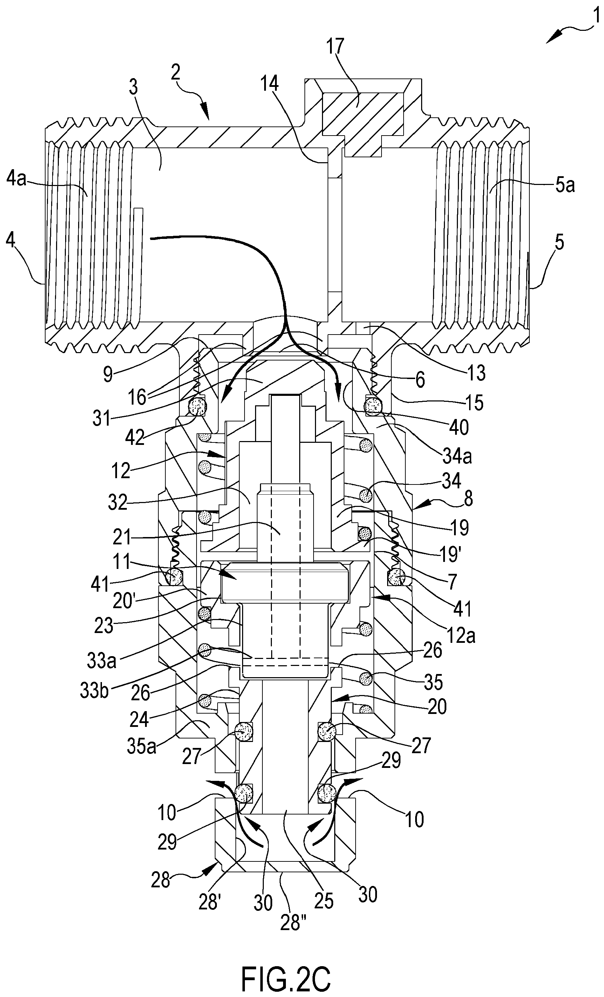

Looking at Figures 2 and 3 of the antifreeze device 1 in a longitudinal section view, the manifold 2 may also include a radial shoulder 14 in the form of a calibrated septum, emerging from an inner surface of the manifold 2 internally to the channel 3 in interposition between the auxiliary opening 6 and the orifice 13. The shoulder 14 is designed to create a pressure drop between the sections of channel 3 respectively upstream and downstream of the same shoulder 14, to allow effective fluid exchange with the valve body 8. The shoulder 14 effectively defines a necking of the channel 3 with a cross-section S2, with dimensions, for example comprised between 9 mm and 46 mm, which is smaller than the constant cross-section S1 of the manifold, but preferably larger than the cross-sections S3 and S4 respectively of the auxiliary opening 6 and the orifice 13. In other words, the size ratio between the cross-section S2 of the necking and the cross-section S3 of the auxiliary opening 6 is comprised between 1.5 and 9.

The manifold 2 may also include a vacuum breaker valve acting on the channel 3 of the manifold 2 or a cap 17.

The manifold 2 may also comprise a sleeve 15, emerging from an outer surface of the manifold 2 in a transverse direction (e.g., orthogonal) to the channel 3, which surrounds both the auxiliary opening 6 and the orifice 13 of the manifold 2. The sleeve 15 also has an engagement portion, for example a threaded portion, suitable for removably engaging and fluid-tightly engaging with a respective engagement portion, also threaded, of the valve body 8. To seal the engagement between the sleeve 15 and the valve body, the valve device 8 also has a sealing element, such as a gasket 42 shown in Figures 3 and 4, interposed between the engagement portions of the sleeve 15 and the valve body 8. As shown in Figures 3 and 4, the sleeve 15 is radially external to the lip 16 bounding the auxiliary aperture 6, resulting spaced from the latter by a minimum distance comprised between 3 mm and 8 mm, which is lower than the cross-section S4 of the auxiliary aperture 6. Specifically, the dimensional relationship between the cross-section S4 and said minimum distance between the outer surface of the lip 16 and the sleeve 15 is comprised between 0.125 and 0.95.

The sleeve 15 has a larger cross-section S5 than the cross-section S3 of the same auxiliary opening 6, for example, ranging in size from 14 mm to 40 mm. In fact, the dimensional ratio between the cross-section S3 of the auxiliary opening 6 and the cross-section S5 inside sleeve 15 is comprised between 0.125 and 0.95.

Turning now to describe the valve body 8, it should be noted that it has a structure made of two pieces, engaged with each other by means of respective engagement portions, optionally threaded, in which fluid sealing is ensured by the presence of a sealing ring 41 interposed between said engagement portions.

The valve body 8 has an inlet 9 facing the auxiliary opening 6 and the orifice 13 of the manifold 2, bounded by a collar 40 engageable to the sleeve 15 at a respective engagement portion, for example threaded. In particular, the collar 40 is radially interposed between the sleeve 15 and the orifice 13 of the manifold 2, thus having a passage cross-section smaller than the passage cross-section S5 of the sleeve 15 itself.

The valve body 8 also includes a drain 10 for expelling fluid to an environment outside the device, conformed as a radial opening made on a side wall of valve body 8, longitudinally opposite to the inlet 9 (see Figures 1 and 4). According to what is shown in the accompanying figures, the drain 10 is, preferentially, defined by two or more radial openings circumferentially spaced from each other. For example, the at least one radial opening or the two or more radial openings is/are through apertures crossing the thickness of said side wall. Said radial opening or openings may extend orthogonally to the side wall or be inclined with respect to the side wall as long as they are able to cross the side wall and laterally discharge fluid. Below to drain 10, the valve body 8 comprises a water storage area 28 laterally bounded by a side wall 28' of valve body 8 and inferiorly bounded by an end wall 28" of the same valve body 8. In other words, the water storage area 28 defines a blind end of the valve body 8, longitudinally opposite to the inlet 9 and adjacent to the drain 10.

The valve body 8 also includes a chamber 7 that places in fluid communication with the inlet 9 of the valve body 8, one or more shutters to selectively interrupt fluid communication between the inlet 9 and the drain 10 of the valve body 8. In particular, the valve body 8 includes a shutter 12 and an auxiliary shutter 12a, both housed within the chamber 7 and movable with respect to the valve body 8 in approaching and moving away from each other to open and close the auxiliary opening 6 of the manifold 2 and the drain 10. Thus, the shutter 12 is movable at least between a closed position where it obstructs the auxiliary opening 6 of the manifold 2 and an open position where it allows fluid to enter through the auxiliary opening 6. The shutter 12 is also movable at least to a partially open position (figure 2B) where it defines, in cooperation with a perimeter edge of the auxiliary opening 6, one or more fluid gaps, each of which has a cross-section area smaller than a maximum cross-section area of the fluid passage present in the shutter 12 in the open position (figure 2C). Thus, the partially open position defines at least one intermediate open position of the shutter 12 between the open and closed positions. It should be noted that the shutter 12, during the movement between the closed and open positions, positions itself in a plurality of partially open positions, gradually moving between the open and closed positions, and vice versa. Dually to the shutter 12, the auxiliary shutter 12a is movable between a respective closed position where it obstructs the outlet 10 of the valve body 8 and a respective open position where it fluidly connects the drain 10 with the external environment of the device 1.

The device is then configured to operate in:
- a first operating condition where the auxiliary shutter (12a) is in the open position and the shutter (12) is also in the open position,
- a second operating condition where the shutter (12) is in the partially open position while the auxiliary shutter (12a) is in the closed position,
- a third operating condition where the shutter (12) is in the closed position and the auxiliary shutter (12a) is also in the closed position.

Now, analyzing the structure of the shutter 12, it includes a cup-shaped upper body 19, which faces the inlet 9 and is configured to selectively close the auxiliary opening 6. Referring to Figures 2A-2C and 3, the upper body 19 has a terminal end 31 facing the inlet 9 and at least partially countershaped to the lip 16 of the auxiliary opening 6, configured to fit, in the closed position of the shutter 12, at least partially within the auxiliary opening 6 itself, abutting against an edge of the lip 16 to close the auxiliary opening 6. On the longitudinally opposite of the terminal end 31, the upper body 19 may have a perimeter edge 19' placed at least partially in contact with an inner surface of the chamber 7 and configured to guide the movement of the same upper body 19 with respect to the valve body 8. In practice, the upper edge 19' may comprise a perforated flange, with a fluted perimeter edge or with an edge having one or more suitable gaps, contacting the inner surface of the chamber 7 and simultaneously allows the passage of fluid.

The upper body 19 of the shutter 12 also has a cavity 32, on the opposite side to the end portion 31, in fluid communication with the chamber 7 of the valve body 8 and configured to house at least one temperature-sensitive element 11 detailed in the following.

Finally, it should be noted that the upper body 19 of the shutter 12 does not open or close the orifice 13, which provides a constant fluid communication between the chamber 7 and the channel 3. In other words, the upper body 19 acts in opening and closing on the auxiliary opening 6 only, allowing a constant fluid flow between the channel 3 of the manifold 2 and the chamber 7 through the orifice 13. Turning now to describe the auxiliary shutter 12a, it has a cup-shaped lower body 20, which faces the drain 10 and is configured to close it under predetermined operating conditions of the valve device. The lower body 20 has a main body 22 on which a perimeter edge 20' is defined at least partially in contact with the inner surface of the valve body 8 and configured to guide the movement of the lower body 20 with respect to the valve body 8.

In practice, the lower edge 20' may comprise a flange, for example drilled, with a fluted perimeter edge or with an edge having one or more suitable gaps, contacting the inner surface of the chamber 7 and simultaneously allows the passage of fluid. The main body 22 of the lower body 20 also features:
- a seat 23 facing the upper body 19 and configured to house at least part of the temperature-sensitive element 11,
- a side opening 26 passing a wall of the main body 22 delimiting the seat 23 and suitable for placing the chamber 7 in fluid communication with the seat 23 of the main body 22.

The lower body 20 of the auxiliary shutter 12a also has a hollow rod 24 extending from the main body 22 on the opposite side to the upper body 19 towards the drain 10. The hollow rod 24 has an elongated tubular conformation that crosses the drain 10 to the water storage area 28 and has a channel 25 configured to place the seat 23 of the main body 22 in fluid communication with the water storage area 28.

The lower body 20 of the auxiliary shutter 12a also has a first and second sealing elements 27, 29, for example gaskets or O-rings, axially spaced to each other and carried by the hollow rod 24 externally to the channel 25. The first sealing element 27 is located in interposition between the chamber 7 of the valve body 8 and the drain 10 and is configured to prevent the passage of fluids from the chamber 7, through a gap defined above the drain 10, between an outer wall of hollow rod 24 and the valve body 8.

On the other hand, the second sealing element 29 is in interposition between the drain 10 and the water storage area 28 of the valve body 8 to selectively allow the passage of fluid from the water storage area 28 itself to the drain 10. Under use conditions of the device 1, and in particular in the open position of the auxiliary shutter 12a, the second sealing element 29 is placed above a connecting edge between the side wall 28' of the water storage area 28 and the drain 10. Under this condition, the second sealing element 29 defines a gap 30 in interposition between the side wall 28' of the water storage area 28 and the sealing element 29 itself, to place the water storage area 28 and the drain 10 in fluid communication. In other words, the fluid inside the water storage area 28 is expelled from the drain 10 through the gap 30. It should be noted that a seal, such as the second sealing element 29, which defines a gap between the seal itself and the drain, allows fluid to be effectively expelled, preventing or limiting the introduction of dust or debris that at most could settle in the water storage area in contact with the end wall 28", thus not preventing the entire valve device 8 to work properly. In the closed position of the auxiliary shutter 12a, the second sealing element 29 occludes the gap 30, thus preventing the passage of fluids from the water storage area 28 toward the drain 10.

The valve body 8 also includes a temperature-sensitive element 11 mechanically engaged to both the shutter 12 and the auxiliary shutter 12a. As described in the following, the temperature-sensitive element 11 is at least responsible for the movement of the upper body 19 of the valve shutter 12 and the lower body 20 of the valve shutter 12 away from each other in their respective open and closed positions and, for the valve shutter 12, in the partial open position.

The temperature-sensitive element 11 is sensitive to variations in temperature and is at least partially deformable, optionally linearly, if the atmospheric temperature or the temperature of the fluid present within the chamber 7 has a value lower than a predetermined threshold value comprised between 0°C and 10°C, optionally substantially equal to 7°C. Said temperature-sensitive element 11 may comprise a case 33a, optionally made of a heat conducting material (e.g., copper or aluminum), at least partially housed inside the seat 23 of the lower body 20 of the auxiliary shutter 12a. The case 33a may be rigid and define, in cooperation with an inner surface the seat 23 of the lower body 20, respective fluid passages extending between each side opening 26 of the main body 20 and the channel 25 of the hollow rod 24. The case 33a, in cooperation with the auxiliary shutter 12a, thus allows the chamber 7 to be placed in fluid communication with the water storage area 28.

The temperature-sensitive element 11 may also include a deformable component 33, placed in a volume inside the enclosure and deformable at least between a contracted condition if the atmospheric or fluid temperature in the chamber 7 is lower than the threshold temperature and an expanded condition if the atmospheric or fluid temperature is greater than the threshold temperature. In the expanded condition, the deformable component 33 has a maximum size, which may be equal to an internal volume of the case 33a while, in the contracted condition, the deformable component 33 has a size lower than said maximum size. In this condition, the deformable component 33 allows the progressive movement of the shutter 12 from the closed position to the partial open position and then to the open position, as well as the movement of the auxiliary shutter 12a from the closed position to the open position.

As shown in Figure 3, the deformable component 33 can be a wax body (or other material that contracts with decreasing temperature) housed inside the housing 33a. The deformable component has a variable volume as a function of a temperature variation to which said deformable component is exposed, to allow the movement of the shutter 12 and the auxiliary shutter 12a between the open and closed positions.

The temperature-sensitive element 11 may also include a rod 21 engaged, at respective ends, to the deformable component 33 and to a portion of the upper body 19 inside the cavity 32. The rod 21 may be rigid, made of a non-temperature-sensitive material, or it can also be part of the deformable component 33 and thus be made of a temperature-sensitive material, thus resulting deformable depending on the temperature of the fluid in chamber 7.

In an alternative embodiment of the temperature-sensitive element 11, the deformable component 33 may be a fluid or gel with variable volume as a function of temperature variations (Figures 2A-2C). According to this embodiment, the temperature-sensitive element 11 may comprise a separator 33b, internal to the housing 33a and defining a chamber 50 for housing the fluid or gel with variable volume. The separator 33b is axially movable with respect to the case 33a of the temperature-sensitive element 11 as a result of the transition between the expanded and contracted conditions of the deformable component 33 or as a result of the expansion or contraction of the fluid or gel with variable volume.

The valve body 8 may also comprise a first and a second spring 34, 35 that respectively act on the upper body 19 and the lower body 20 by moving the upper and lower bodies 19, 20 close to each other. In detail, the first spring 34 is interposed between an upper shoulder 34a of the valve body 8 facing the inlet 9 and the upper body 19 of the shutter 12, while the second spring is interposed between a lower shoulder 35a of the valve body 8 facing the drain 10 and the lower body 20 of the auxiliary shutter 12a.

As mentioned above, the first and second springs 34, 35 have a predetermined elastic preload, configured to oppose the stroke of the shutter 12 and the auxiliary shutter 12a, compressing only as a result of the expansion of the deformable component 33 from the contracted condition to the dilated condition. The second spring 35 also supports the auxiliary shutter 12a, preventing its axial displacement when the auxiliary shutter 12a itself is subjected to an axial force directed toward the drain 10, which is lower than the preload of the second spring 35 itself.

Turning now to describe the operation of the valve device 1, in the condition where the temperature of the working fluid flowing through the channel 3 is above the threshold temperature value, the deformable component 33 of the temperature-sensitive element 11 is in the dilated condition and moves the shutter 12 and the auxiliary shutter 12a to their respective closed positions, allowing the fluid to circulate or station in the supply and return lines 102, 103 without any risk of freezing. In this condition, the orifice 13 of the manifold 2 allows the fluid to enter the manifold inside the chamber 7 of valve body 8. The fluid is then pressurized inside the chamber 7.

In the case where the fluid temperature is lower than the predetermined threshold value, the deformable component 33 of the temperature-sensitive element 11, starting from the contracted condition (Figure 2A), allows the springs 34 and 35 to move the shutter 12 and the auxiliary shutter 12a closer together to bring the shutter 12 to the partially open position (the auxiliary shutter 12a to the closed position). In this condition, and due to the pressure difference at the ends of the shoulder 14, additional fluid enters the chamber 7 of the valve body through the auxiliary opening 6, which laps the temperature-sensitive element 11. Subsequently, there is a gradual movement of the shutter 12 and the auxiliary shutter 12a to their respective open positions, allowing fluid to be discharged through the gap 30 and then through the drain 10 (Figure 2C), thus preventing the formation of ice in the supply and return lines 102, 103 of plant 100.

Considering now a condition in which the fluid temperature is lower than the threshold temperature value and assuming that the thermal unit 101 is turned on, hot fluid (i.e., with temperature higher than the above threshold temperature value) enters in the chamber 7 to contact and heat the case 33a and the deformable component 33 at a temperature higher than the predetermined threshold temperature value, resulting in deformation of the deformable component from the contracted condition to the expanded condition and causing a movement of the shutter 12 and the auxiliary shutter 12a to their respective closed positions.

## Claims

1. Antifreeze device for hydraulic plants comprising:
- a manifold (2) having at least one inlet (4), at least one outlet (5), and at least one channel (3) placing the inlet (4) in fluid communication with the outlet (5), said manifold (2) including an auxiliary opening (6) in interposition between the inlet (4) and the outlet (5),
- a valve body (8) engaged to the manifold (2) and comprising:
∘ an inlet (9) facing the auxiliary opening (6) of the manifold (2),
∘ a drain (10), optionally opposite to the inlet (9), for expelling fluid to the environment,
∘ a chamber (7) that places in fluid communication the inlet (9) and the drain (10) of the valve body (8),
∘ a temperature-sensitive element (11) housed in the chamber (7) and sensitive to temperature variations,
∘ a shutter (12) engaged to the temperature-sensitive element (11) inside the chamber (7) and movable between:
• a closed position, where said shutter (12) closes the auxiliary opening (6) of the manifold (2),
• an open position, where said shutter (12) allows fluid to enter through the auxiliary opening (6);
∘ an auxiliary shutter (12a) configured to be movable between:
• a closed position, where said auxiliary shutter (12a) closes the drain (10) of the valve body (8),
• an open position, where said auxiliary shutter (12a) places the drain (10) in fluid communication with an environment outside the device;
wherein the shutter (12) and the auxiliary shutter (12a) are both housed within the chamber (7) and movable with respect to the valve body (8) in approaching and moving away from each other to open and close the auxiliary opening (6) and the drain (10), the temperature-sensitive element (11) being mechanically engaged to both the shutter (12) and the auxiliary shutter (12a).

2. Antifreeze device according to claim 2, wherein the drain (10) for expelling fluid to an environment outside the device is conformed as at least one radial opening made on a side wall of the valve body (8), longitudinally opposite to the inlet (9).

3. Antifreeze device according to claim 2, wherein the drain (10) comprises two or more radial openings circumferentially spaced from each other.

4. Antifreeze device according to claim 2 or 3, wherein the at least one radial opening or the two or more radial openings is/are through apertures crossing the thickness of said side wall.

5. Antifreeze device according to claim 2 or 3 or 4, wherein said radial opening or openings extend orthogonally to the side wall or are inclined with respect to the side wall and are able to cross the side wall and laterally discharge fluid.

6. Antifreeze device according to any one of the preceding claims, wherein the shutter (12) includes a cup-shaped upper body (19), which faces the auxiliary opening (6) of the manifold (2) and is configured for obstructing the same auxiliary opening (6) in the closed position of the shutter (12); and
wherein the auxiliary shutter (12a) includes a cup-shaped lower body (20) facing the drain (10) and configured for closing said drain (10) in the closed position of the auxiliary shutter (12a).

7. Antifreeze device according to claim 6, wherein the lower body (20) of the auxiliary shutter (12a) has a main body (22) on which a respective seat (23) facing the upper body (19) is defined and configured for housing at least part of the temperature-sensitive element (11);
wherein the lower body of the auxiliary shutter (12a) has a hollow rod (24) extending from the main body (22) across the drain (10), on the opposite side to the upper body (19).

8. Antifreeze device according to claim 7, wherein the hollow rod (24) has a channel (25) in fluid communication with the seat (23) of the main body (22).

9. Antifreeze device according to claim 7 or 8, wherein the main body (22) of the lower body (20) has at least one side opening (26) for placing the chamber (7) in fluid communication with the seat (23) of the main body (22).

10. Antifreeze device according to claims 8 and 9, wherein the valve body (8) has a water storage area (28) below the drain (10) and in fluid communication with the channel (25) of the hollow rod (24), in particular wherein the water storage area (28) is laterally bounded by a side wall (28') and inferiorly bounded by an end wall (28").

11. Antifreeze device according to any one of claims 8-10, wherein the lower body (20) of the auxiliary shutter (12a) includes a first sealing element (27) carried by the hollow rod (24) externally to the channel (25) in interposition between the chamber (7) of the valve body (8) and the drain (10).

12. Antifreeze device according to claim 11, wherein the lower body (20) of the auxiliary shutter (12a) includes a second sealing element (29) carried by the hollow rod (24) externally to the channel (25) in interposition between the drain (10) and the water storage area (28) of the valve body (8), and wherein the first and second sealing elements are axially spaced apart.

13. Antifreeze device according to claim 12, wherein the first sealing element (27) is configured for preventing the passage of fluids from the chamber (7) through a gap defined, under use conditions of device (1), above the drain (10) between an outer wall of the hollow rod (24) and the valve body (8); and
wherein the second sealing element (29), in the open position of the auxiliary shutter (12a), defines a gap (30) in interposition between a side wall (28') of the water storage area (28) and the same sealing element (29), configured for placing the water storage area (28) in fluid communication with the drain (10); further wherein said second sealing element (29), in the closed position of the auxiliary shutter (12a), occludes the gap (30) preventing the passage of fluids from the water storage area (28) to the drain (10);
in particular wherein the second sealing element (29), in the open position of the auxiliary shutter (12a), is placed, in use, above a connecting edge between the side wall (28') of the water storage area (28) and the drain (10).

14. Antifreeze device according to any one of claims 7-14, wherein the temperature-sensitive element (11) comprises a case (33a) housed inside the seat (23) of the lower body (20) of the auxiliary shutter (12a).

15. Hydraulic plant, for example heating plant of the type located at least partially outside a closed environment to be heated, said plant comprising:
- a thermal unit (101), such as a heat pump, configured for being located outside the closed environment,
- at least one supply line (102) connected to the thermal unit (101),
- at least one return line (103) connected to the thermal unit (101),
- one or more antifreeze devices (1) according to any one of the preceding claims, each engaged to a respective one of said supply and return lines (102, 103).

## Patentansprüche

1. Frostschutzvorrichtung für hydraulische Anlagen, umfassend:
- einen Verteiler (2), der zumindest einen Einlass (4), zumindest einen Auslass (5) und zumindest einen Kanal (3) aufweist, der den Einlass (4) in Fluidverbindung mit dem Auslass (5) setzt, wobei der Verteiler (2) eine zwischen dem Einlass (4) und dem Auslass (5) liegende Hilfsöffnung (6) beinhaltet,
- einen Ventilkörper (8), der mit dem Verteiler (2) in Eingriff steht und umfasst:
∘ einen Einlass (9), der der Hilfsöffnung (6) des Verteilers (2) zugewandt ist,
∘ einen Abfluss (10), optional dem Einlass (9) gegenüberliegend, zum Ausstoßen von Fluid in die Umgebung,
∘ eine Kammer (7), die den Einlass (9) und den Abfluss (10) des Ventilkörpers (8) in Fluidverbindung setzt,
∘ ein temperaturempfindliches Element (11), das in der Kammer (7) aufgenommen ist und gegenüber Temperaturänderungen empfindlich ist,
∘ ein Verschlusselement (12), das mit dem temperaturempfindlichen Element (11) im Inneren der Kammer (7) in Eingriff steht und beweglich ist zwischen:
• einer Schließstellung, in der das Verschlusselement (12) die Hilfsöffnung (6) des Verteilers (2) schließt,
• einer Offenstellung, in der das Verschlusselement (12) Fluid durch die Hilfsöffnung (6) eintreten lässt;
∘ ein Hilfsverschlusselement (12a), das dazu konfiguriert ist, beweglich zu sein zwischen:
• einer Schließstellung, in der das Hilfsverschlusselement (12a) den Abfluss (10) des Ventilkörpers (8) schließt,
• einer Offenstellung, in der das Hilfsverschlusselement (12a) den Abfluss (10) in Fluidverbindung mit einer Umgebung außerhalb der Vorrichtung setzt;
wobei das Verschlusselement (12) und das Hilfsverschlusselement (12a) beide innerhalb der Kammer (7) aufgenommen und relativ zum Ventilkörper (8) beweglich sind, indem sie sich einander annähern und voneinander entfernen, um die Hilfsöffnung (6) und den Abfluss (10) zu öffnen und zu schließen, wobei das temperaturempfindliche Element (11) sowohl mit dem Verschlusselement (12) als auch mit dem Hilfsverschlusselement (12a) mechanisch in Eingriff steht.

2. Frostschutzvorrichtung nach Anspruch 2, wobei der Abfluss (10) zum Ausstoßen von Fluid in eine Umgebung außerhalb der Vorrichtung als zumindest eine radiale Öffnung ausgestaltet ist, die an einer Seitenwand des Ventilkörpers (8) ausgebildet ist, in Längsrichtung dem Einlass (9) gegenüberliegend.

3. Frostschutzvorrichtung nach Anspruch 2, wobei der Abfluss (10) zwei oder mehr radiale Öffnungen umfasst, die in Umfangsrichtung voneinander beabstandet sind.

4. Frostschutzvorrichtung nach Anspruch 2 oder 3, wobei die zumindest eine radiale Öffnung oder die zwei oder mehr radialen Öffnungen Durchgangsöffnungen ist/sind, die die Dicke der genannten Seitenwand durchqueren.

5. Frostschutzvorrichtung nach Anspruch 2 oder 3 oder 4, wobei die genannte radiale Öffnung oder die genannten radialen Öffnungen sich orthogonal zur Seitenwand erstrecken oder bezüglich der Seitenwand geneigt sind und dazu in der Lage sind, die Seitenwand zu durchqueren und Fluid seitlich abzugeben.

6. Frostschutzvorrichtung nach einem der vorhergehenden Ansprüche, wobei das Verschlusselement (12) einen becherförmigen oberen Körper (19) beinhaltet, der der Hilfsöffnung (6) des Verteilers (2) zugewandt ist und dazu konfiguriert ist, dieselbe Hilfsöffnung (6) in der Schließstellung des Verschlusselements (12) zu versperren; und
wobei das Hilfsverschlusselement (12a) einen becherförmigen unteren Körper (20) beinhaltet, der dem Abfluss (10) zugewandt ist und dazu konfiguriert ist, den genannten Abfluss (10) in der Schließstellung des Hilfsverschlusselements (12a) zu schließen.

7. Frostschutzvorrichtung nach Anspruch 6, wobei der untere Körper (20) des Hilfsverschlusselements (12a) einen Hauptkörper (22) aufweist, an dem ein jeweiliger Sitz (23) definiert ist, der dem oberen Körper (19) zugewandt und dazu konfiguriert ist, zumindest einen Teil des temperaturempfindlichen Elements (11) aufzunehmen;
wobei der untere Körper des Hilfsverschlusselements (12a) eine Hohlstange (24) aufweist, die sich vom Hauptkörper (22) durch den Abfluss (10) hindurch auf der dem oberen Körper (19) gegenüberliegenden Seite erstreckt.

8. Frostschutzvorrichtung nach Anspruch 7, wobei die Hohlstange (24) einen Kanal (25) aufweist, der in Fluidverbindung mit dem Sitz (23) des Hauptkörpers (22) steht.

9. Frostschutzvorrichtung nach Anspruch 7 oder 8, wobei der Hauptkörper (22) des unteren Körpers (20) zumindest eine Seitenöffnung (26) aufweist, um die Kammer (7) in Fluidverbindung mit dem Sitz (23) des Hauptkörpers (22) zu setzen.

10. Frostschutzvorrichtung nach den Ansprüchen 8 und 9, wobei der Ventilkörper (8) einen Wasserspeicherbereich (28) unterhalb des Abflusses (10) aufweist, der in Fluidverbindung mit dem Kanal (25) der Hohlstange (24) steht, insbesondere wobei der Wasserspeicherbereich (28) seitlich von einer Seitenwand (28') und unterseitig von einer Endwand (28") begrenzt ist.

11. Frostschutzvorrichtung nach einem der Ansprüche 8 bis 10, wobei der untere Körper (20) des Hilfsverschlusselements (12a) ein erstes Dichtelement (27) beinhaltet, das von der Hohlstange (24) außerhalb des Kanals (25) getragen wird und zwischen der Kammer (7) des Ventilkörpers (8) und dem Abfluss (10) liegt.

12. Frostschutzvorrichtung nach Anspruch 11, wobei der untere Körper (20) des Hilfsverschlusselements (12a) ein zweites Dichtelement (29) beinhaltet, das von der Hohlstange (24) außerhalb des Kanals (25) getragen wird und zwischen dem Abfluss (10) und dem Wasserspeicherbereich (28) des Ventilkörpers (8) liegt, und wobei das erste und das zweite Dichtelement axial voneinander beabstandet sind.

13. Frostschutzvorrichtung nach Anspruch 12, wobei das erste Dichtelement (27) dazu konfiguriert ist, den Durchtritt von Fluiden aus der Kammer (7) durch einen Spalt zu verhindern, der unter Gebrauchsbedingungen der Vorrichtung (1) oberhalb des Abflusses (10) zwischen einer Außenwand der Hohlstange (24) und dem Ventilkörper (8) definiert ist; und
wobei das zweite Dichtelement (29) in der Offenstellung des Hilfsverschlusselements (12a) einen zwischen einer Seitenwand (28') des Wasserspeicherbereichs (28) und demselben Dichtelement (29) liegenden Spalt (30) definiert, konfiguriert zum Setzen des Wasserspeicherbereichs (28) in Fluidverbindung mit dem Abfluss (10); wobei ferner das genannte zweite Dichtelement (29) in der Schließstellung des Hilfsverschlusselements (12a) den Spalt (30) verschließt und dadurch den Durchtritt von Fluiden aus dem Wasserspeicherbereich (28) zum Abfluss (10) verhindert;
insbesondere wobei das zweite Dichtelement (29) in der Offenstellung des Hilfsverschlusselements (12a) im Gebrauch oberhalb einer Verbindungskante zwischen der Seitenwand (28') des Wasserspeicherbereichs (28) und dem Abfluss (10) angeordnet ist.

14. Frostschutzvorrichtung nach einem der Ansprüche 7 bis 14, wobei das temperaturempfindliche Element (11) ein Gehäuse (33a) umfasst, das im Inneren des Sitzes (23) des unteren Körpers (20) des Hilfsverschlusselements (12a) aufgenommen ist.

15. Hydraulische Anlage, beispielsweise Heizungsanlage der Art, die zumindest teilweise außerhalb einer zu beheizenden geschlossenen Umgebung angeordnet ist, wobei die Anlage umfasst:
- eine thermische Einheit (101), wie eine Wärmepumpe, die dazu konfiguriert ist, außerhalb der geschlossenen Umgebung angeordnet zu sein,
- zumindest eine Zulaufleitung (102), die mit der thermischen Einheit (101) verbunden ist,
- zumindest eine Rücklaufleitung (103), die mit der thermischen Einheit (101) verbunden ist,
- eine oder mehrere Frostschutzvorrichtungen (1) nach einem der vorhergehenden Ansprüche, die jeweils mit einer der genannten Zulauf- und Rücklaufleitungen (102, 103) in Eingriff stehen.

## Revendications

1. Dispositif antigel pour installations hydrauliques comprenant :
- un collecteur (2) présentant au moins une entrée (4), au moins une sortie (5), et au moins un canal (3) mettant l'entrée (4) en communication fluidique avec la sortie (5), ledit collecteur (2) incluant une ouverture auxiliaire (6) interposée entre l'entrée (4) et la sortie (5),
- un corps de vanne (8) engagé avec le collecteur (2) et comprenant :
∘ une entrée (9) faisant face à l'ouverture auxiliaire (6) du collecteur (2),
∘ une vidange (10), optionnellement opposée à l'entrée (9), pour expulser du fluide vers l'environnement,
∘ une chambre (7) qui met en communication fluidique l'entrée (9) et la vidange (10) du corps de vanne (8),
∘ un élément sensible à la température (11) logé dans la chambre (7) et sensible aux variations de température,
∘ un obturateur (12) engagé avec l'élément sensible à la température (11) à l'intérieur de la chambre (7) et mobile entre :
• une position fermée, dans laquelle ledit obturateur (12) ferme l'ouverture auxiliaire (6) du collecteur (2),
• une position ouverte, dans laquelle ledit obturateur (12) permet au fluide d'entrer par l'ouverture auxiliaire (6) ;
∘ un obturateur auxiliaire (12a) configuré pour être mobile entre :
• une position fermée, dans laquelle ledit obturateur auxiliaire (12a) ferme la vidange (10) du corps de vanne (8),
• une position ouverte, dans laquelle ledit obturateur auxiliaire (12a) met la vidange (10) en communication fluidique avec un environnement extérieur au dispositif ;
dans lequel l'obturateur (12) et l'obturateur auxiliaire (12a) sont tous deux logés au sein de la chambre (7) et mobiles par rapport au corps de vanne (8) en se rapprochant et en s'éloignant l'un de l'autre pour ouvrir et fermer l'ouverture auxiliaire (6) et la vidange (10), l'élément sensible à la température (11) étant engagé mécaniquement avec à la fois l'obturateur (12) et l'obturateur auxiliaire (12a).

2. Dispositif antigel selon la revendication 2, dans lequel la vidange (10) pour expulser du fluide vers un environnement extérieur au dispositif est conformée en au moins une ouverture radiale réalisée sur une paroi latérale du corps de vanne (8), longitudinalement opposée à l'entrée (9).

3. Dispositif antigel selon la revendication 2, dans lequel la vidange (10) comprend deux ouvertures radiales ou plus espacées circonférentiellement les unes des autres.

4. Dispositif antigel selon la revendication 2 ou 3, dans lequel l'au moins une ouverture radiale ou les deux ouvertures radiales ou plus est/sont des ouvertures traversantes traversant l'épaisseur de ladite paroi latérale.

5. Dispositif antigel selon la revendication 2 ou 3 ou 4, dans lequel ladite ouverture radiale ou lesdites ouvertures radiales s'étendent orthogonalement à la paroi latérale ou sont inclinées par rapport à la paroi latérale et sont aptes à traverser la paroi latérale et à décharger latéralement du fluide.

6. Dispositif antigel selon l'une quelconque des revendications précédentes, dans lequel l'obturateur (12) inclut un corps supérieur (19) en forme de coupelle, qui fait face à l'ouverture auxiliaire (6) du collecteur (2) et est configuré pour obstruer cette même ouverture auxiliaire (6) dans la position fermée de l'obturateur (12) ; et
dans lequel l'obturateur auxiliaire (12a) inclut un corps inférieur (20) en forme de coupelle faisant face à la vidange (10) et configuré pour fermer ladite vidange (10) dans la position fermée de l'obturateur auxiliaire (12a).

7. Dispositif antigel selon la revendication 6, dans lequel le corps inférieur (20) de l'obturateur auxiliaire (12a) présente un corps principal (22) sur lequel un logement respectif (23) faisant face au corps supérieur (19) est défini et configuré pour loger au moins une partie de l'élément sensible à la température (11) ;
dans lequel le corps inférieur de l'obturateur auxiliaire (12a) présente une tige creuse (24) s'étendant depuis le corps principal (22) à travers la vidange (10), du côté opposé au corps supérieur (19).

8. Dispositif antigel selon la revendication 7, dans lequel la tige creuse (24) présente un canal (25) en communication fluidique avec le logement (23) du corps principal (22).

9. Dispositif antigel selon la revendication 7 ou 8, dans lequel le corps principal (22) du corps inférieur (20) présente au moins une ouverture latérale (26) pour mettre la chambre (7) en communication fluidique avec le logement (23) du corps principal (22).

10. Dispositif antigel selon les revendications 8 et 9, dans lequel le corps de vanne (8) présente une zone de stockage d'eau (28) au-dessous de la vidange (10) et en communication fluidique avec le canal (25) de la tige creuse (24), en particulier dans lequel la zone de stockage d'eau (28) est délimitée latéralement par une paroi latérale (28') et inférieurement par une paroi d'extrémité (28").

11. Dispositif antigel selon l'une quelconque des revendications 8 à 10, dans lequel le corps inférieur (20) de l'obturateur auxiliaire (12a) inclut un premier élément d'étanchéité (27) porté par la tige creuse (24) extérieurement au canal (25), interposé entre la chambre (7) du corps de vanne (8) et la vidange (10).

12. Dispositif antigel selon la revendication 11, dans lequel le corps inférieur (20) de l'obturateur auxiliaire (12a) inclut un second élément d'étanchéité (29) porté par la tige creuse (24) extérieurement au canal (25), interposé entre la vidange (10) et la zone de stockage d'eau (28) du corps de vanne (8), et dans lequel les premier et second éléments d'étanchéité sont espacés axialement l'un de l'autre.

13. Dispositif antigel selon la revendication 12, dans lequel le premier élément d'étanchéité (27) est configuré pour empêcher le passage de fluides depuis la chambre (7) à travers un interstice défini, dans des conditions d'utilisation du dispositif (1), au-dessus de la vidange (10) entre une paroi extérieure de la tige creuse (24) et le corps de vanne (8) ; et
dans lequel le second élément d'étanchéité (29), dans la position ouverte de l'obturateur auxiliaire (12a), définit un interstice (30) interposé entre une paroi latérale (28') de la zone de stockage d'eau (28) et ce même élément d'étanchéité (29), configuré pour mettre la zone de stockage d'eau (28) en communication fluidique avec la vidange (10) ; dans lequel en outre ledit second élément d'étanchéité (29), dans la position fermée de l'obturateur auxiliaire (12a), obture l'interstice (30) en empêchant le passage de fluides de la zone de stockage d'eau (28) vers la vidange (10) ;
en particulier dans lequel le second élément d'étanchéité (29), dans la position ouverte de l'obturateur auxiliaire (12a), est placé, en utilisation, au-dessus d'un bord de raccordement entre la paroi latérale (28') de la zone de stockage d'eau (28) et la vidange (10).

14. Dispositif antigel selon l'une quelconque des revendications 7 à 14, dans lequel l'élément sensible à la température (11) comprend un boîtier (33a) logé à l'intérieur du logement (23) du corps inférieur (20) de l'obturateur auxiliaire (12a).

15. Installation hydraulique, par exemple installation de chauffage du type situé au moins partiellement à l'extérieur d'un environnement fermé à chauffer, ladite installation comprenant :
- une unité thermique (101), telle qu'une pompe à chaleur, configurée pour être située à l'extérieur de l'environnement fermé,
- au moins une conduite d'alimentation (102) reliée à l'unité thermique (101),
- au moins une conduite de retour (103) reliée à l'unité thermique (101),
- un ou plusieurs dispositifs antigel (1) selon l'une quelconque des revendications précédentes, chacun étant engagé avec une conduite respective parmi lesdites conduites d'alimentation et de retour (102, 103).
